# EUROPEAN PATENT APPLICATION

(11) **EP 2 372 388 A1**
(43) Date of publication of application: **05.10.2011**
(21) Application number: 10158920.8
(22) Date of filing: 01.04.2010
(51) Int. Cl.: G01S 7/292, G01S 7/527, G01S 13/52, G01S 13/88, G01S 15/52, G01S 15/88, G01F 23/284, G01F 23/296, G01S 13/10, G01S 15/10

(54) **A pulse-echo level measuring method**

(71) Applicant: Siemens Milltronics Process Instruments Inc., Peterborough, ON K9J 7B1 (CA)
(72) Inventor: Brown, Robert, Peterborough, ON K9J 6V8 (CA); Larocque, Jean-René, Peterborough, ON K9J 8E1 (CA)
(74) Representative: Maier, Daniel Oliver

(57) **Abstract**

A pulse-echo level measuring method comprises the steps of:
- successively transmitting energy pulses to a surface of a material whose level is to be measured,
- receiving and converting, for each energy pulse, associated echoes into an echo function over time,
- providing a time-varying threshold function (TVT) and identifying valid echoes (E1, E2, E3) in each echo function as those that exceed the threshold function (TVT),
- identifying, on the basis of changes in position of the valid echoes (E1, E2, E3) of at least three echo functions and on the further basis of motion information on the level of the material, one of the valid echoes (E1, E2, E3) of each echo function as coming from the surface of the material, and
- using the identified echo (E2) for tracking the level.

According to the invention, echo processing is simplified in that the method further comprises the step of:
- once the wanted echo (E2) is identified, reshaping the time-varying threshold function (TVT) to mask the hitherto valid echoes (E1, E3) with the exception of the identified echo (E2).

## Description

The present invention relates to a pulse-echo level measuring method comprising the steps of:
- successively transmitting energy pulses to a surface of a material whose level is to be measured,
- receiving and converting, for each energy pulse, associated echoes into an echo function over time,
- providing a time-varying threshold function and identifying valid echoes in each echo function as those that exceed the threshold function,
- identifying, on the basis of changes in position of the valid echoes of at least three echo functions and on the further basis of motion information on the level of the material, one of the valid echoes of each echo function as coming from the surface of the material, and
- using the identified echo for tracking the level.

Such a method is known from EP 2 093 546 A1 or US 2010/0019949 A1.

Time-of-flight or pulse-echo ranging systems are commonly used in level measurement applications for determining the distance to a reflective surface of a material, such as liquid, slurry or solid, by measuring how long after transmission of an energy pulse the echo or reflected pulse is received. Time-of-flight systems typically use ultrasonic, radar or microwave pulses and generally include a transducer and a signal processor. The transducer serves the dual role of periodically transmitting the energy pulses and receiving the echoes. The signal processor is for detecting and calculating the distance or range of the material surface, based on the travel times of the transmitted energy pulses and the reflected energy pulses or echoes. For that purpose, the signal processor forms an echo function or echo profile representing the received echo amplitudes as a function of their respective travel times. Each value of the echo function corresponds to the amplitude of an echo reflected at a certain distance from the transducer.

One main problem of echo processing is selecting the wanted level echo from false echoes generated by other obstacles such as the internal structure of and installations in a tank or vessel containing the material. A commonly used technique for finding the wanted echo in an echo profile involves generating a time-varying threshold (TVT) curve. The TVT curve provides a baseline on the echo profile which is above the noise level in the echo profile and above the level of the echoes of the obstacles. The echo of interest then appears above the TVT curve. Various algorithms and techniques are known in the art for the generating the TVT curve. The TVT is usually acquired by shaping around the echo profile of an empty vessel. It can also be manually shaped or adjusted to provide the best performance.

Further, an echo lock window may be used as a rudimentary history tracker to track the echo of interest in consecutive measurement cycles. For a next echo to be considered valid, it must be within the lock window. Otherwise, it must appear within a potential new lock window for a consecutive number of times before being selected.

In the above-mentioned EP 2 093 546 A1 and US 2010/0019949 A1, a method is described in which the echoes exceeding the TVT curve are analyzed whether and to what extent they move in subsequently obtained echo profiles. Each stationary or moving echo forms a track which allows for calculating the motion speed and predicting the next positions of the echo. A bank of recursive filters, such as Kalman filters, may be used to monitor each track. Based on information on the motion of the material level, the echo on that track whose velocity corresponds with the motion information is selected as the wanted level echo and used for further tracking of the level. The motion information on the level to be measured may be the filling or emptying rate of a vessel containing the material, or simply the fact that the level is moving whereas other echo-producing obstacles in the vessel are stationary.

According to the invention, echo processing is simplified in that the method initially set forth further comprises the step of:
- once the wanted echo is identified, reshaping the time-varying threshold function to mask the hitherto valid echoes with the exception of the identified echo.

Once the echo of the moving level of the material is identified, the tracking algorithm performed in the signal processor has enough information to automatically reshape the TVT to mask the echoes of the fixed obstacles and leave only the wanted level echo. Thus, the echo processing is simplified because the tracking task is reduced to only one echo. This allows for increasing the measurement rate.

The method according to the invention is completely adaptive and will react to new echoes from fixed obstacles which new echoes creep up above the TVT in presence of the moving level echo.

During the measurement, the moving level echo may reach or cross a zone of a stationary echo in which zone the TVT is reshaped around the stationary echo. Even if normally the echoes from obstacles are not as strong as the level echo, it may happen that the level echo will not exceed the TVT and thus will be lost. However, as the tracking algorithm allows for predicting the next positions of the echo, the level of the material can be tracked for a certain time until the echo is caught again after it emerges from the reshaped TVT zone.

One more advantage is that a user familiar with manual TVT shaping is prevented from becoming confused by seeing strong echoes above the TVT which are being ignored.

As mentioned above, the echo processing is simplified because the tracking task is reduced to only one echo. This is of special advantage when the step of identifying the echo coming from the surface of the material comprises:
- forming tracks of valid echoes of successive echo functions,
- using recursive filters to monitor each track by estimating a track velocity and predicting the position of the next echo, and
- selecting the echo on that track whose velocity corresponds with the motion information on the level of the material.
Once the level echo is identified and the TVT is reshaped only one filter is needed for further echo tracking, i.e. tracking the level echo.

For further description of the invention, reference is made to the accompanying drawings, in which, by way of example:
- Figure 1: shows an echo function (echo profile) and a time-varying threshold (TVT) function,
- Figure 2: shows the previous 25 echo profiles, and
- Figure 3: shows the echo function of Figure 1 and a reshaped TVT function.

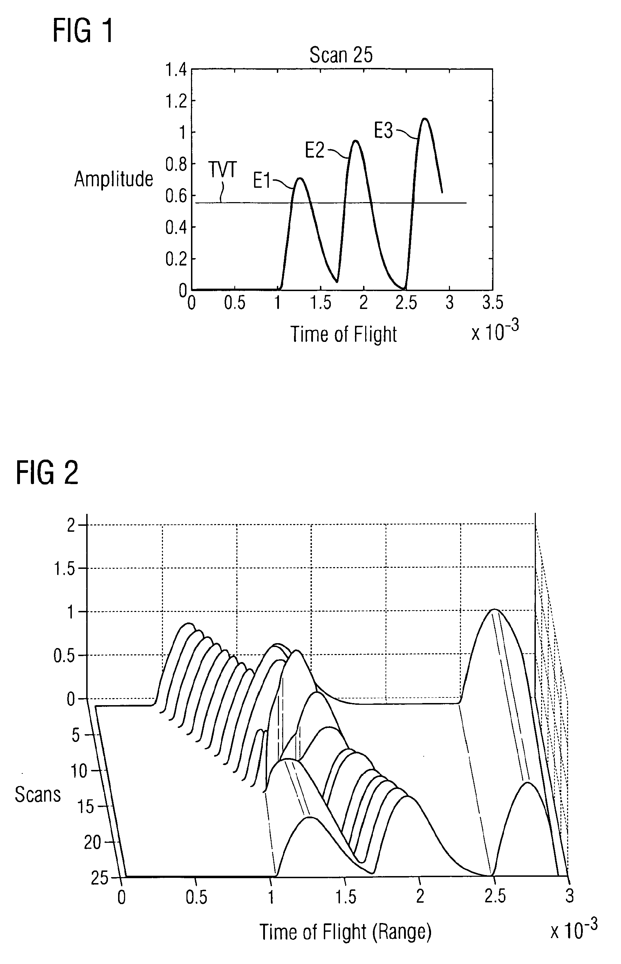

Figure 1 shows an instantaneous echo function or profile obtained from a pulse-echo level measurement. Only those echoes are considered valid which exceed a time-varying threshold (TVT) function. Based on current algorithms available, one would select the first echo E1 in radar applications as the level echo of interest. In ultrasonic applications one would typically select the largest echo as the echo of interest, which here is the third echo E3.

Figure 2 holds the information of the previous 25 echo profiles. When processing scan #25 of Figure 1 by itself, both typical settings select the wrong level echo. But when using the historical information, it is very easy to select the right level echo which is the echo E2 in the middle of scan #25, because it is the one that is moving. The first and third echoes E1 and E3 are stationary and come from fixed obstacles in the measurement environment.

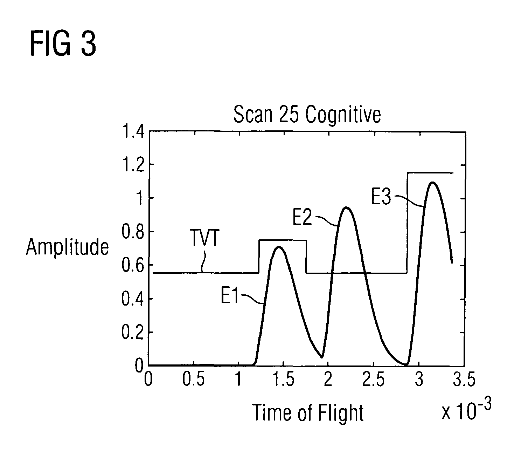

With this information, the TVT is reshaped around the stationary echoes E1 and E3 as shown in Figure 3.

## Claims

1. A pulse-echo level measuring method comprising the steps of:
- successively transmitting energy pulses to a surface of a material whose level is to be measured,
- receiving and converting, for each energy pulse, associated echoes into an echo function over time,
- providing a time-varying threshold function (TVT) and identifying valid echoes (E1, E2, E3) in each echo function as those that exceed the threshold function (TVT),
- identifying, on the basis of changes in position of the valid echoes (E1, E2, E3) of at least three echo functions and on the further basis of motion information on the level of the material, one of the valid echoes (E1, E2, E3) of each echo function as coming from the surface of the material, and
- using the identified echo (E2) for tracking the level;
said method further comprising the step of:
- once the wanted echo (E2) is identified, reshaping the time-varying threshold function (TVT) to mask the hitherto valid echoes (E1, E3) with the exception of the identified echo (E2).

2. The method according to claim 1, wherein the step of identifying the echo (E2) coming from the surface of the material comprises:
- forming tracks of valid echoes (E1, E2, E3) of successive echo functions,
- using recursive filters to monitor each track by estimating a track velocity and predicting the position of the next echo, and
- selecting the echo on that track whose velocity corresponds with the motion information on the level of the material.
